# EUROPEAN PATENT SPECIFICATION

(11) **EP 3 569 115 B1**
(45) Date of publication and mention of the grant of the patent: **30.12.2020**
(21) Application number: 19172146.3
(22) Date of filing: 01.05.2019
(51) Int. Cl.: A47J 31/52, A47J 31/00

(54) **A COFFEE PROCESSING METHOD, A CONTROL APPARATUS AND A COFFEE MACHINE**
VERFAHREN ZUR KAFFEEVERARBEITUNG, STEUERUNGSVORRICHTUNG UND KAFFEEMASCHINE
PROCÉDÉ DE TRAITEMENT DE CAFÉ, APPAREIL DE COMMANDE ET MACHINE À CAFÉ

(30) Priority: 16.05.2018 CN 201810467298
(43) Date of publication of application: 20.11.2019
(73) Proprietor: Foshan Hojid Electrical Equipment Ltd, Foshan, Guangdong 528500 (CN); Cai, Jianming, Zhanjiang, Guangdong 524005 (CN)
(72) Inventor: CAI, Jianming, Guangdong 524005 (CN); HE, Shaobo, Foshan, Guangdong 528500 (CN)
(74) Representative: Haseltine Lake Kempner LLP

(56) References cited:
- WO-A1-2013/098777
- WO-A1-2015/055342
- CN-A- 105 747 925
- DE-U1-202013 009 305
- US-A- 4 762 055
- US-A1- 2017 027 367

## Description

### FIELD OF THE INVENTION

The present invention relates to the field of coffee processing, more particularly, to a coffee processing method, a control apparatus and a coffee machine.

### BACKGROUND OF THE INVENTION

Coffee, as one of the world's three major beverages, is very popular in people's lives. Due to its wide popularity, making coffee in traditional way takes too much time to follow the rapid pace of modern society. Under such circumstance, there is a need for convenient and efficient coffee machine.

However, the existing coffee machine has low automation level. When coffee is heated and reaches a preset temperature (usually 100°C), the existing coffee machine can hardly stop the heating in a short time, which results in thermal hysteresis of the coffee and causes coffee's continuous boiling. The continuous boiling would not only affect coffee taste, but also lead to waste of power energy.

DE 20 2013 009 305 U1 describes a control system with an electrical control and regulating device for setting a physical heating variable, in particular for controlling a heater of a beverage preparation machine for regulating the temperature of the water to be heated therein. An analog controller is provided for setting a predetermined or definable setpoint, via a targeted increase in the setpoint.

### SUMMARY OF THE INVENTION

In order to solve the problems existing in the prior art, the present invention provides a coffee processing method, and a coffee machine, which can reduce the power consumption of the coffee machine while guaranteeing good coffee taste.

According to a first aspect of the present invention there is provided a coffee processing method comprising:
performing a first working mode of the coffee machine to heat the coffee liquid with an initial temperature T₀;
calculating a heating rate Vₜ at the first working mode by Vₜ=(T₁-T₀)/t when the temperature of the coffee liquid reaches a sampling temperature T₁, wherein t represents the time taken for the temperature of the coffee liquid to rise from T₀ to T₁;
determining a starting control temperature Tₓ according to Tₓ=a₀+a₁Vₜ+a₂Vₜ², wherein each of a₀, a₁ and a₂ represents a given value;
determining a proportional coefficient for power adjustment Kₚ according to Kₚ₌b₀+b₁Vₜ+b₂Vₜ², wherein each of b₀, b₁ and b₂ represents a given value; determining a power adjustment time tₓ according to tₓ=c₀+c₁Vₜ+c₂Vₜ², wherein each of c₀, c₁ and c₂ represents a given value; and
performing a second working mode of the coffee machine according to the proportional coefficient for power adjustment and the power adjustment time when the coffee liquid reaches the starting control temperature, wherein the second working mode is different from the first working mode.

In some embodiments of the present invention, the first working mode is of a working mode in which the coffee liquid is heated with constant power (such as full power) and agitated with uniform rotation.

In some embodiments of the present invention, each of the heating rate Vₜ, the starting control temperature Tₓ and the power adjustment time tₓ has its own reference interval with lower and upper limits respectively; for any one of Vₜ, Tₓ and tₓ, if its value is less than the lower limit of its own reference interval, its value is replaced with the lower limit of its own reference interval; and if its value is more than its own reference interval, its value is replaced with the upper limit of its own reference interval.

In some embodiments of the present invention, performing the second working mode of the coffee machine according to the proportional coefficient for power adjustment and the power adjustment time comprises: adjusting heating power according to the proportional coefficient for power adjustment, and controlling end time of heating according to the power adjustment time.

In some embodiments of the present invention, the method further comprises: monitoring at least one condition parameter of the coffee machine, wherein the at least one condition parameter includes any one or more of working current, temperature, running time and the heating rate; determining whether any of the at least one condition parameter is abnormal and stopping the coffee machine when any of the at least one condition parameter is abnormal.

Also described herein is a control apparatus for the coffee machine, wherein the control apparatus comprises a memory for storing one or more computer instructions, and a processor for executing the one or more computer instructions to implement the above method.

The present invention further provides a coffee machine according to claim 6.

In some embodiments of the present invention, the agitating apparatus comprises: an agitator positioned inside and on the bottom of the cup body; and a driver disposed outside the cup body and comprising a motor and an actuating disc driven by the motor. Wherein, a first magnet is disposed at the agitator and is away from the rotation center of the agitator, a second magnet is disposed at the actuating disc and is away from the rotation center of the actuating disc, and the driver drives the agitator by magnetic force generated by the first and second magnets.

The present invention can adjust the heating power according to the proportional coefficient for power adjustment and the power adjustment time when the coffee liquid reaches the starting control temperature, such that the heating can be stopped when the coffee liquid reaches the optimal temperature to avoid continuous boiling and finally reduce the power consumption of the coffee machine while guaranteeing good coffee taste. Besides, such method can equip the coffee machine with improved automation level and use efficiency.

### BRIEF DESCRIPTION OF THE DRAWINGS

In order to facilitate the understanding, the present invention will be further described by way of illustrative embodiments with reference to the accompanying drawings.
Figure 1 is a schematic flow chart of a coffee processing method according to an embodiment of the present invention.
Figure 2 is an illustrative heating curve for the processing method as shown in Figure 1.
Figure 3 is a cross-sectional view of a coffee machine according to the embodiment of the present invention.

### DETAILED DESCRIPTION OF THE INVENTION

Illustrative embodiments of the present invention will be described in detail herein with reference to the accompanying drawings. It should be appreciated that the description of the illustrative embodiments should be considered to be illustrative of the coffee processing method and the coffee machine, and is not intended to limit the invention to the illustrative embodiments.

The present invention provides a coffee processing method comprising the following steps: obtaining a heating rate of the coffee liquid at a first working mode of the coffee machine; determining a starting control temperature, a proportional coefficient for power adjustment and a power adjustment time according to the heating rate; and performing a second working mode of the coffee machine according to the proportional coefficient for power adjustment and the power adjustment time when the coffee liquid reaches the starting control temperature, wherein the second working mode is different from the first working mode.

In an embodiment of the present invention, the first working mode is of a working mode in which the coffee liquid is heated with constant power and agitated with uniform rotation. Preferably, full power can be used to reduce processing time. The second working mode comprises: adjusting the heating power according to the proportional coefficient for power adjustment; controlling the end time of heating and agitating according to the power adjustment time. By adjusting the coffee machine to the second working mode, it is possible to stop heating when the coffee liquid reaches the optimal temperature, so as to avoid the coffee liquid continuous boiling and finally reduce the power consumption of the coffee machine while guaranteeing good coffee taste. Preferably, after adjusting the coffee machine to the second working mode, the agitation of the coffee liquid is stopped.

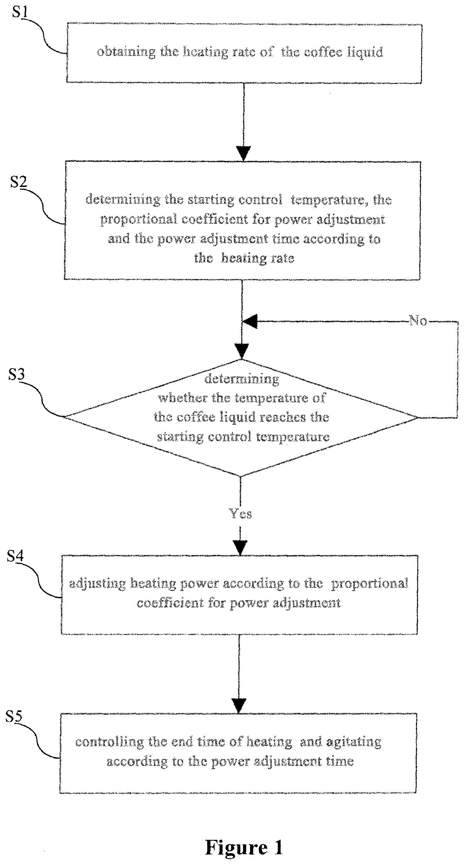

Specifically, Figure 1 is a schematic flow chart of the coffee processing method according to the present invention. Referring to Figure 1, the method may comprise:
S 1, obtaining the heating rate of the coffee liquid;
S2, determining the starting control temperature, the proportional coefficient for power adjustment and the power adjustment time according to the heating rate;
S3, determining whether the temperature of the coffee liquid reaches the starting control temperature; If No, returning to execute S3; If Yes, executing S4;
S4, adjusting heating power according to the proportional coefficient for power adjustment;
S5, controlling the end time of heating and agitating according to the power adjustment time.

The step S2 of determining the starting control temperature, the proportional coefficient for power adjustment and the power adjustment time can be performed by establishing a first functional relationship between the starting control temperature and the heating rate, a second functional relationship between the proportional coefficient for power adjustment and the heating rate, and a third functional relationship between the power adjustment time and the heating rate. The process of establishing the above functional relationships will be described in detail below.

In the present disclosure, multiple tests in three situations of a maximum liquid volume, a median liquid volume, and a minimum liquid volume were performed to obtain the optimal experimental data under the three situations. The optimal experimental data under the three situations are shown in the table 1 below.

**Table 1**

| | Minimum Liquid Volume | Median Liquid Volume | Maximum Liquid Volume |
|---|---|---|---|
| Vₜ | 23 | 15 | 10 |
| Tₓ | 75 | 88 | 92 |
| Kₚ | 15 | 25 | 30 |
| tₓ | 10 | 17 | 22 |

Wherein, Vₜ represents the heating rate, Tₓrepresents the starting control temperature, Kₚ represents the proportional coefficient for power adjustment, and tₓ represents the power adjustment time.

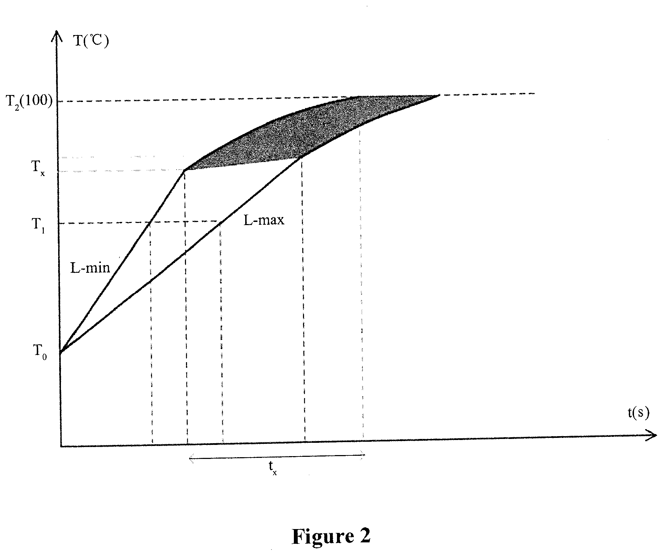

Figure 2 is an illustrative heating curve for the processing method as shown in Figure 1. In Figure 2, T₀ represents an initial temperature of the coffee liquid; T₁ represents a sampling temperature, i.e., the temperature of the coffee liquid used to calculate the heating rate; T₂ represents a target temperature, which is usually 100 °C by default; Tₓ represents the optimal starting control temperature; tₓ represents the optimal power adjustment time, and tₓ in this figure is indicated in the situation of the minimum liquid volume; L-min represents a heating curve of the minimum liquid volume; L-max represents a heating curve of the maximum liquid volume; and the shaded area represents an area where power is adjusted at various liquid volumes.

In the present invention, the first functional relationship between the starting control temperature and the heating rate, the second functional relationship between the proportional coefficient for power adjustment and the heating rate, and the third functional relationship between the power adjustment time and the heating rate are established by polynomial curve fitting using the polynomial function F(x) = l₀+l₁x+l₂x²+l₃x³.......+lₙxⁿ.

In particular, for Tₓ, the polynomial function Tₓ=a₀+a₁Vₜ+a₂Vₜ² is used and the numerical calculation is carried out according to the experimental data in Table 1, as follows: $75 = {a}_{0} + {a}_{1} ∗ 13 + {a}_{2} ∗ {23}^{2} ;$ $88 = {a}_{0} + {a}_{1} ∗ 15 + {a}_{2} ∗ {15}^{2} ;$ $92 = {a}_{0} + {a}_{1} ∗ 10 + {a}_{2} ∗ {10}^{2} ;$ as a result, a₀=90.481; a₁=0.787; a₂=0.063.

Similarly , for Kₚ , the polynomial function Kₚ=b₀+b₁Vₜ+b₂Vₜ² is used, the experimental data is plugged into the polynomial function to get:
b₀=37.115; b₁=-0.519; b₂=-0.019.

For tₓ, the polynomial function tₓ₌c₀+c₁Vₜ+c₂Vₜ² is used, and the experimental data is plugged into the polynomial function to get:c₀=33.442; c₁=-1.24; c₂=0.01.

Thus, the first functional relationship between the starting control temperature and the heating rate, the second functional relationship between the proportional coefficient for power adjustment and the heating rate, and the third functional relationship between the power adjustment time and the heating rate are determined.

The implementation process of the coffee processing method of the present invention will be exemplified below.

When cooking Turkish coffee, there are strict requirements about time and temperature. The cooking time should be short, and it is necessary to stop heating as soon as possible upon reaching the set temperature (100 °C) so as to avoid thermal hysteresis causing the coffee's continuous boiling.

The coffee processing method of the present invention comprises: starting the coffee machine; obtaining the initial temperature T₀ of the coffee liquid; heating the coffee liquid at the first working mode in which full power is used for heating, and agitating the coffee liquid at a uniform speed during heating to accelerate the heat transfer of the coffee liquid to make the coffee liquid evenly heated and further obtain an accurate heating rate. In one embodiment of the present invention, a control signal is output by means of PWM (Pulse-Width Modulation) to control on /off of the switching transistor, thereby controlling the DC motor to maintain a uniform rotation. Of course, other suitable control means in the art can also be used.

The heating rate is calculated by Vₜ=(T₁-T₀)/t when the temperature of the coffee liquid reaches the sampling temperature T₁, wherein t represents the time taken for the temperature of the coffee liquid to rise from T₀ to T₁. According to such calculated value of Vₜ, the starting control temperature Tₓ, the proportional coefficient for power adjustment Kₚ and the power adjustment time tₓ are calculated according to the above respective functional relationships.

Since the volume of coffee liquid to be processed by the coffee machine has the maximum and minimum liquid volumes limits, each of the heating rate Vₜ, the starting control temperature Tₓ and the power adjusting time tₓ has its own reference interval with lower and upper limits respectively. In order to avoid deviations of the calculated values of the heating rate Vₜ, the starting control temperature Tₓ and the power adjustment time tₓ in some extreme situations (for example, when the volume of the coffee liquid is extremely small), which would result in failure to obtain a good taste of the processed coffee liquid, any one of the Vₜ, Tₓ and tₓ can be set as followed: if its value is less than its corresponding lower limit, its value is replaced with the lower limit of its own reference interval; and if its value is more than its corresponding upper limit, its value is replaced with the upper limit of its own reference interval.

Specially, according to the optimal experimental data in Table 1, if the heating rate Vₜ<10 , then it is deemed that Vₜ=10, and if the heating rate Vₜ>23 , then it is deemed that Vₜ=23; if the starting control temperature Tₓ<75, then it is deemed that Tₓ=75, and if the starting control temperature Tₓ>92, then it is deemed that Tₓ=92; and if the power adjustment time tₓ>22, then it is deemed that tₓ=22.

When the temperature of the coffee liquid reaches the starting control temperature Tₓ, the coffee machine enters into the second working mode, in which, a PWM signal is output according to the proportional coefficient for power adjustment Kₚ to control the on/off of the thyristor and adjust the heating power, thereby controlling the heating rate Vₜ to make the temperature of the coffee liquid slowly approach the target temperature T₂ and timing is performed upon the coffee machine entering into the second working mode.

Once the power adjustment time tₓ has elapsed, the heating is stopped and the coffee machine is automatically turned off.

According to the coffee processing method of the present invention, heating power can be adjusted according to the proportional coefficient for power adjustment and the power adjustment time when the coffee liquid reaches the starting control temperature, such that the heating can be stopped when the coffee liquid reaches the optimal temperature to avoid the coffee liquid continuous boiling, and finally reduce the power consumption of the coffee machine while guaranteeing good coffee taste. Besides, such method can equip the coffee machine with improved automation level and use efficiency.

In an embodiment of the present invention, the above method can further comprise a step of intelligent alarming comprising: monitoring condition parameters such as the motor working current, temperature and running time, etc. of the coffee machine; analyzing monitored condition parameters of the coffee machine to diagnose the working condition of the coffee machine; stopping the coffee machine and generating an alarm to ensure safety when any one of the condition parameters is abnormal.

The abnormality refers to the situations where any one of monitored condition parameters is below or beyond its respective preset threshold, for example:
(1) Motor abnormality: The working condition of the motor is obtained by monitoring the current signal of the motor. If the value of the monitored current signal is below the preset current threshold (a given value) thereof, the coffee machine is stopped automatically.
(2) Heating abnormality: The heating rate Vₜ is obtained by calculating. If the calculated Vₜ is more than the preset threshold thereof (a given value), it is judged that the total heating liquid volume is extremely little and the coffee machine is stopped automatically.
(3) Timeout abnormality: Running time is read after starting the coffee machine. If the read running time is beyond the maximum of the preset time, the coffee machine is stopped automatically.
(4) Over-heating abnormality: The temperature of the coffee liquid is obtained by monitoring. If the monitored temperature is higher than 100°C, it is determined that the coffee machine is in dry burning condition and the coffee machine is stopped automatically.

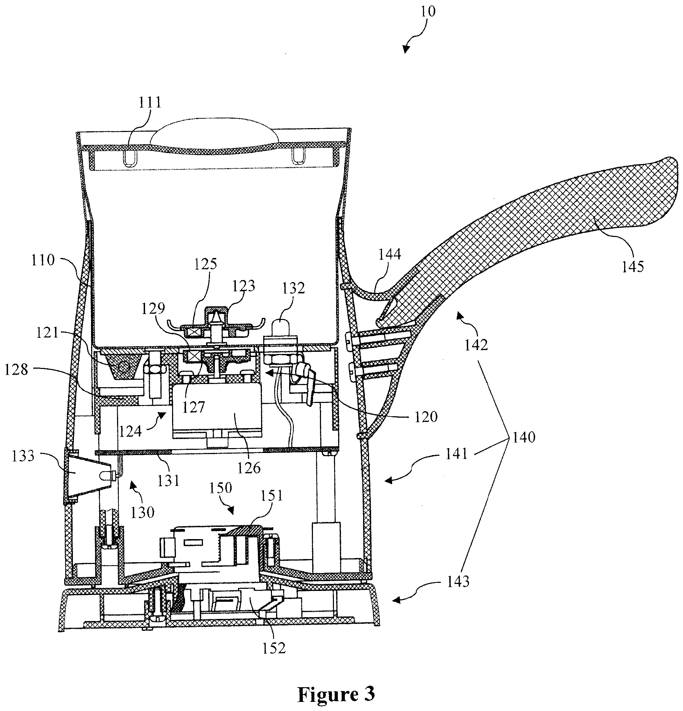

Embodiments of the present invention further provide a coffee machine 10 for processing coffee by means of the above method. Referring to Figure 3, the coffee machine 10 includes a cup body 110, a coffee processing module 120, a control module 130, a kettle body 140 and a power supply module 150.

In the embodiment of the present invention, the cup body 110 is configured to contain coffee liquid and comprises a cup cover 111.

The coffee processing module 120 comprises a heating element 121 fixed to the bottom of the cup body 110, and an agitating apparatus comprising an agitator 123 and a driver 124. The heating element 121 may be fixed to the bottom of the cup body 110 by welding, or at any other suitable location by any other suitable means in the art.

The agitator 123 is positioned inside and on the bottom of the cup body 110, and a first magnet 125 is disposed at the agitator 123 and is away from the rotation center of the agitator 123. In the embodiment of the present invention, the agitator 123 is sleeved on a shaft protruding from the bottom of the cup body 110. Alternatively, the agitator 123 can be positioned inside and on the bottom of the cup body 110 in any other suitable way. For example, the agitator 123 can be sleeved on a shaft protruding from the lower surface of the cup cover 111 which covers the opening of the cup body 110 such that the agitator 123 is positioned inside and on the bottom of the cup body 110 during use.

In an embodiment of the present invention, the driver 124, disposed outside the cup body 110 and corresponding to the agitator 123, comprises a motor 126 and an actuating disc 127. In particular, the cup body 110 is coupled to the motor 126 via a baffle ring 128, of which a part is mounted to the outside of bottom of the cup body 110 by a stud and a nut, and another part is mounted to the motor 126 by a screw. The actuating disc 127 is sleeved on the shaft of the motor 126, and a second magnet 129 is at the actuating disc 127 and is away from the rotation center of actuating disc 127. The agitator 123 is driven to rotate by magnetic force generated by the second magnet 129 and the first magnet 125. Therefore, there is no need for the cup body to provide an opening for connecting the motor 126 and the agitator 123 to secure the sealing of the cup body.

The control module 130 comprises a control apparatus 131, a temperature sensing probe 132 and a switch 133. The control apparatus 131 comprises a memory for storing one or more computer instructions, and a processor for executing the one or more computer instructions to implement the method described above. The temperature sensing probe 132 is disposed inside and on the bottom of the cup body 110 and is electrically coupled to the control apparatus 131 to transmit the monitored data to the control apparatus. After the control apparatus 131 receives the monitored data from the temperature sensing probe 132, the processor executes the corresponding steps in accordance with the instructions stored in the memory to control the coffee processing module 120 to complete the coffee processing. In particular, in an embodiment of the present invention, the temperature sensing probe 132 is disposed inside and on the bottom of the cup body 110 through an opening at the bottom of the cup body 110 and fixed to the cup body 110 with a nut. Rubber gaskets are disposed on both sides of the opening to prevent the coffee liquid in the cup body 110 from seeping out. The temperature sensing probe 132 is electrically coupled to the control apparatus 131 fixed to the baffle ring 128 through a wire. The switch 133 is snapped into the side wall of a kettle shell 141 and sleeved on an induction spring of the control apparatus 131.

The control module 130 can further comprise a flash light and/or a buzzer. The control apparatus 131 controls the flash light to blink and/or the buzzer to sound an alarm when any abnormality of the working condition parameter of the coffee machine 10 is detected.

In an embodiment of the present invention, the kettle body 140 comprises a kettle shell 141, a handle assembly 142 and a base 143. The kettle body 140 has a chamber for receiving the cup body 110. The handle assembly 142 comprises a handle 145 and a connector 144, wherein the connector 144 is detachably disposed on the side wall of the kettle shell 141 by a screw, and the handle 145 is inserted into the connector 144 and fixed by a buckle structure. The base 143 is configured to support the kettle shell 141. In an alternative embodiment, the kettle shell 141, the handle assembly 142 and the base 143 can be formed integrally.

The power supply module 150 comprises a receiving portion 151 for receiving power, which is disposed at the bottom of the kettle shell 141, and a plug152 for supplying power, which is coupled to an external supply device, the plug 152 protruding from the base 143 and corresponding to the receiving portion 151. Where the plug 152 is inserted into the receiving portion 151, the receiving portion 151 and the plug 152 are electrically coupled to each other to transmit electric energy to the coffee machine 10.

Although some embodiments have been described herein, various modifications may be made without departing from the protection scope limited by appended claims of the present invention.

## Claims

1. A coffee processing method comprising:
performing a first working mode of the coffee machine to heat the coffee liquid with an initial temperature T₀ the method being **characterized by**
calculating a heating rate Vₜ at the first working mode by Vₜ=(T₁-T₀)/t when the temperature of the coffee liquid reaches a sampling temperature T₁, wherein t represents the time taken for the temperature of the coffee liquid to rise from T₀ to T₁;
determining a starting control temperature Tₓ according to Tₓ=a₀+a₁Vₜ+a₂Vₜ², wherein each of a₀, a₁ and a₂ represents a given value;
determining a proportional coefficient for power adjustment Kₚ according to Kₚ=b₀+b₁Vₜ+b₂Vₜ², wherein each of b₀, b₁ and b₂ represents a given value;
determining a power adjustment time tₓ according to tₓ=c₀+c₁Vₜ+c₂Vₜ², wherein each of c₀, c₁ and c₂ represents a given value; and
performing a second working mode of the coffee machine according to the proportional coefficient for power adjustment Kₚ and the power adjustment time tₓ when the coffee liquid reaches the starting control temperature Tₓ, wherein the second working mode is different from the first working mode.

2. The coffee processing method of claim 1, wherein the first working mode is of a working mode in which the coffee liquid is heated with constant power and agitated with uniform rotation.

3. The coffee processing method of claim 1, wherein each of the heating rate Vₜ, the starting control temperature Tₓ and the power adjustment time tₓ has its own reference interval with lower and upper limits respectively;
for any one of Vₜ, Tₓ and tₓ, if its value is less than the lower limit of its own reference interval, its value is replaced with the lower limit of its own reference interval; and if its value is more than the upper limit of its own reference interval, its value is replaced with the upper limit of its own reference interval.

4. The coffee processing method of any of claims 1-3, wherein performing a second working mode of the coffee machine according to the proportional coefficient for power adjustment and the power adjustment time comprises:
adjusting heating power according to the proportional coefficient for power adjustment; and
controlling the end time of heating according to the power adjustment time.

5. The coffee processing method of claim 1 further comprising,
monitoring at least one condition parameter of the coffee machine wherein the at least one condition parameter includes any one or more of working current, temperature, running time and the heating rate;
determining whether any of the at least one condition parameter is abnormal; and
stopping the coffee machine when any of the at least one condition parameter is abnormal.

6. A coffee machine (10) comprising,
a cup body (110) for containing coffee liquid;
a coffee processing module (120) comprising a heating element (121) for heating the coffee liquid and an agitating apparatus for agitating the coffee liquid;
a control module (130) comprising a control apparatus (131) and a temperature sensing probe (132) for sensing the temperature of the coffee liquid, wherein the control apparatus (131) comprises a memory for storing one or more computer instructions and a processor for executing the one or more computer instructions to control the coffee processing module (120) to process the coffee liquid according to the method of any of claims 1-7;
a kettle body (140) having a chamber for receiving the cup body (110); and
a power supply module (150).

7. The coffee machine (10) of claim 6, wherein the agitating apparatus comprises:
an agitator (123) positioned inside and on the bottom of the cup body (110); and
a driver (124) disposed outside the cup body (110) and comprising a motor (126) and an actuating disc (127) driven by the motor (126);
wherein, a first magnet (125) is disposed at the agitator (123) and is away from rotation center of the agitator (123), a second magnet (129) is disposed at the actuating disc (127) and is away from the rotation center of the actuating disc (127), and the driver (124) drives the agitator (123) by magnetic force generated by the first and second magnets (125, 129).

## Patentansprüche

1. Kaffeeverarbeitungsverfahren, das Verfahren umfassend:
Ausführen eines ersten Betriebsmodus der Kaffeemaschine zum Erhitzen der Kaffeeflüssigkeit mit einer Anfangstemperatur T₀, wobei das Verfahren durch Folgendes gekennzeichnet ist
Berechnen einer Heizrate Vₜ bei dem ersten Betriebsmodus durch Vₜ=(T₁-T₀)/t, wenn die Temperatur der Kaffeeflüssigkeit eine Probenahmetemperatur T₁ erreicht, wobei t die Zeit darstellt, die notwendig ist, damit die Temperatur der Kaffeeflüssigkeit von T₀ auf T₁ ansteigt;
Bestimmen einer Startsteuertemperatur Tₓ gemäß Tₓ=a₀+a₁Vₜ⁺a₂Vₜ², wobei jedes von a₀, a₁ und a₂ einen gegebenen Wert darstellt;
Bestimmen eines Proportionalkoeffizienten für Leistungseinstellung Kₚ gemäß Kₚ=b₀+b₁Vₜ+b₂Vₜ², wobei jedes von b₀, b₁ und b₂ einen gegebenen Wert darstellt;
Bestimmen einer Leistungsanpassungszeit tₓ gemäß tₓ=c₀+c₁Vₜ+C₂Vₜ², wobei jedes von c₀, c₁ and c₂ einen gegebenen Wert darstellt; und
Ausführen eines zweiten Betriebsmodus der Kaffeemaschine gemäß dem Proportionalkoeffizienten für die Leistungseinstellung Kₚ und der Leistungseinstellzeit tₓ, wenn die Kaffeeflüssigkeit die Startsteuertemperatur Tₓ erreicht, wobei der zweite Betriebsmodus von dem ersten Betriebsmodus verschieden ist.

2. Kaffeeverarbeitungsverfahren gemäß Anspruch 1, wobei der erste Betriebsmodus ein Betriebsmodus ist, in dem die Kaffeeflüssigkeit mit konstanter Leistung erhitzt und mit gleichförmiger Drehung gerührt wird.

3. Kaffeeverarbeitungsverfahren gemäß Anspruch 1, wobei jedes von der Aufheizrate Vₜ, der Startsteuertemperatur Tₓ und der Leistungseinstellzeit tₓ ein eigenes Referenzintervall mit Unter- bzw. Obergrenze aufweist;
wenn für ein beliebiges von Vₜ, Tₓ und tₓ sein Wert kleiner ist als die Untergrenze seines eigenen Referenzintervalls, wird sein Wert durch die Untergrenze seines eigenen Referenzintervalls ersetzt; und wenn sein Wert größer ist als die Obergrenze seines eigenen Referenzintervalls, wird sein Wert durch die Obergrenze seines eigenen Referenzintervalls ersetzt.

4. Kaffeeverarbeitungsverfahren gemäß einem der Ansprüche 1-3, wobei ein Ausführen eines zweiten Betriebsmodus der Kaffeemaschine gemäß dem proportionalen Koeffizienten für die Leistungseinstellung und die Leistungseinstellzeit Folgendes umfasst:
Einstellen einer Heizleistung gemäß dem Proportionalkoeffizienten zur Leistungseinstellung; und
Steuern der Endzeit eines Erwärmens entsprechend der Leistungsanpassungszeit.

5. Kaffeeverarbeitungsverfahren gemäß Anspruch 1, ferner umfassend,
Überwachen mindestens eines Zustandsparameters der Kaffeemaschine, wobei der mindestens eine Zustandsparameter eine oder mehrere von Arbeitsstrom, Temperatur, Laufzeit und Aufheizrate umfasst;
Bestimmen, ob einer des mindestens einen Zustandsparameters abnorm ist; und Anhalten der Kaffeemaschine, wenn einer des mindestens einen Zustandsparameters abnorm ist.

6. Kaffeemaschine (10), umfassend,
einen Becherkörper (110) zum Enthalten von Kaffeeflüssigkeit;
ein Kaffeeverarbeitungsmodul (120), umfassend ein Heizelement (121) zum Erhitzen der Kaffeeflüssigkeit und einer Rührvorrichtung zum Rühren der Kaffeeflüssigkeit;
ein Steuermodul (130), umfassend eine Steuervorrichtung (131) und eine Temperaturerfassungssonde (132) zum Erfassen der Temperatur der Kaffeeflüssigkeit, wobei die Steuervorrichtung (131) einen Speicher zum Speichern eines oder mehrerer Computeranweisungen und einen Prozessor zum Ausführen der einen oder der mehreren Computeranweisungen, um das Kaffeeverarbeitungsmodul (120) zu steuern, um die Kaffeeflüssigkeit gemäß dem Verfahren nach einem der Ansprüche 1-7 zu verarbeiten;
einen Kesselkörper (140), der eine Kammer zum Aufnehmen des Becherkörpers (110) aufweist; und ein Stromversorgungsmodul (150).

7. Kaffeemaschine (10) gemäß Anspruch 6, wobei die Rührvorrichtung Folgendes umfasst:
einen Rührer (123), der innerhalb und an dem Boden des Becherkörpers (110) positioniert ist; und
einen Antrieb (124), der außerhalb des Becherkörpers (110) angeordnet ist und einen Motor (126) und eine von dem Motor (126) angetriebene Betätigungsscheibe (127) umfasst;
wobei ein erster Magnet (125) an dem Rührer (123) angeordnet ist und von der Drehmitte des Rührers (123) entfernt ist, ein zweiter Magnet (129) an der Betätigungsscheibe (127) angeordnet ist und von der Drehmitte der Betätigungsscheibe (127) entfernt ist, und der Antrieb (124) den Rührer (123) durch eine von dem ersten und dem zweiten Magneten (125, 129) erzeugte Magnetkraft antreibt.

## Revendications

1. Un procédé de traitement du café comprenant :
l'exécution d'un premier mode de fonctionnement de la machine à café pour chauffer le café liquide avec une température initiale T₀, le procédé étant **caractérisé par**
le calcul d'une vitesse de chauffage Vₜ au premier mode de fonctionnement par V₁ = (T₁-T₀)/t lorsque la température du café liquide atteint une température d'échantillonnage T₁, dans lequel t représente le temps nécessaire pour que la température du café liquide passe de T₀ à T₁ ;
la détermination d'une température de contrôle de démarrage Tₓ en fonction de Tₓ = a₀+a₁Vₜ+a₂Vₜ², dans lequel chacun de a₀, a₁ et a₂ représente une valeur donnée ;
la détermination d'un coefficient proportionnel pour le réglage de puissance Kₚ en fonction de Kₚ = b₀+b₁Vₜ+b₂Vₜ², dans lequel chacun de b₀, b₁ et b₂ représente une valeur donnée ;
la détermination d'un temps de réglage de puissance tₓ en fonction de tₓ = c₀+c₁Vₜ+c₂Vₜ², dans lequel chacun de c₀, c₁ et c₂ représente une valeur donnée ; et
l'exécution d'un deuxième mode de fonctionnement de la machine à café en fonction du coefficient proportionnel pour le réglage de puissance Kₚ et du temps de réglage de puissance tₓ lorsque le café liquide atteint la température de contrôle de démarrage Tₓ, dans lequel le deuxième mode de fonctionnement est différent du premier mode de fonctionnement.

2. Le procédé de traitement du café selon la revendication 1, dans lequel le premier mode de fonctionnement est d'un mode de fonctionnement dans lequel le café liquide est chauffé avec une puissance constante et agité avec une rotation uniforme.

3. Le procédé de traitement du café selon la revendication 1, dans lequel chacun parmi la vitesse de chauffage Vₜ, la température de contrôle de démarrage Tₓ et le temps de réglage de puissance tₓ a son propre intervalle de référence avec des limites inférieure et supérieure respectivement ;
pour l'un quelconque parmi Vₜ, Tₓ et tₓ, si sa valeur est inférieure à la limite inférieure de son propre intervalle de référence, sa valeur est remplacée par la limite inférieure de son propre intervalle de référence ; et si sa valeur est supérieure à la limite supérieure de son propre intervalle de référence, sa valeur est remplacée par la limite supérieure de son propre intervalle de référence.

4. Le procédé de traitement du café selon l'une quelconque des revendications 1 à 3, dans lequel l'exécution d'un deuxième mode de fonctionnement de la machine à café en fonction du coefficient proportionnel pour le réglage de puissance et du temps de réglage de puissance comprend :
le réglage de puissance de chauffage en fonction du coefficient proportionnel pour le réglage de puissance ; et
le contrôle du temps de fin de chauffage en fonction du temps de réglage de puissance.

5. Le procédé de traitement du café selon la revendication 1 comprenant en outre,
la surveillance d'au moins un paramètre d'état de la machine à café, dans laquelle l'au moins un paramètre d'état comprend l'un quelconque ou plusieurs parmi le courant de fonctionnement, la température, le temps de fonctionnement et la vitesse de chauffage ;
la détermination du fait que l'un quelconque parmi l'au moins un paramètre d'état est anormal ; et
l'arrêt de la machine à café lorsque l'un quelconque parmi l'au moins un paramètre d'état est anormal.

6. Une machine à café (10) comprenant,
un corps de tasse (110) pour contenir le café liquide ;
un module de traitement du café (120) comprenant un élément chauffant (121) pour chauffer le café liquide et un appareil d'agitation pour agiter le café liquide ;
un module de contrôle (130) comprenant un appareil de contrôle (131) et une sonde de détection de température (132) pour détecter la température du café liquide, dans laquelle l'appareil de contrôle (131) comprend une mémoire pour stocker une ou plusieurs instructions informatiques et un processeur pour exécuter l'une ou plusieurs instructions informatiques pour contrôler le module de traitement du café (120) pour traiter le café liquide selon le procédé selon l'une quelconque des revendications 1 à 7 ;
un corps de bouilloire (140) ayant une chambre pour recevoir le corps de tasse (110) ; et
un module d'alimentation électrique (150).

7. La machine à café (10) selon la revendication 6, dans laquelle l'appareil d'agitation comprend :
un agitateur (123) positionné à l'intérieur et sur le fond du corps de tasse (110) ; et
un entraîneur (124) disposé à l'extérieur du corps de tasse (110) et comprenant un moteur (126) et un disque d'actionnement (127) entraîné par le moteur (126) ;
dans laquelle, un premier aimant (125) est disposé au niveau de l'agitateur (123) et est à l'écart du centre de rotation de l'agitateur (123), un deuxième aimant (129) est disposé au niveau du disque d'actionnement (127) et est à l'écart du centre de rotation du disque d'actionnement (127), et l'entraîneur (124) entraîne l'agitateur (123) par la force magnétique générée par les premier et deuxième aimants (125, 129).
